# Europäisches Patentamt

# European Patent Office

# Office européen des brevets

(19)

(11) Veröffentlichungsnummer: **0 025 591**
**A1**

(12) ## EUROPÄISCHE PATENTANMELDUNG

(21) Anmeldenummer: **80105431.3**

(22) Anmeldetag: **11.09.80**

(51) Int. Cl.³: **C 08 J 3/24**, C 08 J 7/04
// (C08J3/24, C08K3/24, 5/09)

(30) Priorität: **12.09.79 DE 2936906**

(43) Veröffentlichungstag der Anmeldung: **25.03.81**
**Patentblatt 81/12**

(84) Benannte Vertragsstaaten: **CH FR GB IT LI NL**

(71) Anmelder: **Luperox GmbH, Wasserburg Denzinger Strasse 7, D-8870 Günzburg (DE)**

(72) Erfinder: **Gröpper, Jürgen, Denzingen Hinter den Gärten 12, D-8870 Günzburg (DE)**

(74) Vertreter: **Abitz, Walter, Dr.-Ing. et al, Abitz, Morf, Gritschneder P.O. Box 86 01 09, D-8000 München 86 (DE)**

(54) **Verfahren zur Vernetzung von Polymeren und/oder Copolymeren mittels Radikalbildern in Gegenwart von Sauerstoff.**

(57) Polymere und Copolymere, die mit Initiatoren für freie Radikale in Anwesenheit von Sauerstoff vernetzt werden sollen, werden vor oder nach der Verformung, aber vor der Vernetzung mit metallorganischen Verbindungen von Übergangselementen, mit anorganischen Salzen von Übergangselementen, mit Lanthanidenverbindungen oder mit Gemischen dieser Verbindungen behandelt. Die Vorbehandlung führt zu klebefreien Oberflächen der vernetzten Formkörper.

EP 0 025 591 A1

Verfahren zur Vernetzung von Polymeren und/oder
Copolymeren mittels Radikalbildnern in Gegenwart von
Sauerstoff

Die Erfindung betrifft die Vorbehandlung von Polymeren
und Copolymeren, die mittels Initiatoren für freie Radikale in Gegenwart von Sauerstoff vernetzt werden sollen.

Aus der technischen Literatur ist es bekannt, die Vernetzung von Polymeren und Copolymeren, besonders von
dicken und komplizierten Profilen, durch Schwefel unter
Anwendung der UHF-Heissluft-Methode durchzuführen. Es
ist weiter bekannt, dass die Vernetzung mit Radikalinitiatoren, wie organischen Peroxiden in Gegenwart
von Sauerstoff, zu unvollständig vernetzten und klebrigen Oberflächen der Teile führt (vgl. z.B. Farbenfabriken Bayer, Merkblatt vom 2. 3. 1962 Levapren 450
(Äthylen-vinylacetat), Abschnitt 7.1.1 bis 7.1.5, sowie
Merkblatt vom 1. 12. 1965 Urepan (Urethankautschuk),
Seite 15, 1. Abschnitt, und Chemische Werke Hüls,
Mai 1976, 3. Auflage, Buna AP (EPM/EPDM) Baueinsatz
"Hinweise für Verarbeiter", Seite 4). Die Klebrigkeit
tritt besonders bei hochgefüllten und ölverstreckten
Copolymeren auf, wie Äthylen-Propylen-Copolymeren (EPM),
Äthylen-Propylen-Dienmonomer-Copolymeren (EPDM), Styrol-
Butadien-Kautschuk (SBR), Acrylnitril-Budadien-Kautschuk
(NBR), Naturkautschuk (cis-1,4-Polyisopren) (NR),
Isoprenkautschuk (IR), Äthylen-Vinylacetat-Copolymeren
(EVA), Acrylnitril-Butadien-Styrol-Copolymeren (ABS),
Styrol-Butadien-Styrol-Kautschuk (SBS), Styrol-Isopren-
Styrol-Copolymeren (SIS), Chloropren-Kautschuk (CR),
chloriertem Polyäthylen (CM) und Polymethankautschuk
bzw. Polymethylenkautschuk. Um die bessere Qualität
von mit Radikalinitiatoren vernetzten Polymeren zu
erhalten, hat man die Vernetzung mittels organischer
Peroxid-Initiatoren in einem geschmolzenen Salz-Bad,
bekannt als "liquid curing method" (LCM), im Dampfrohr
oder in anderen geschlossenen Systemen vorgenommen.

0025591
IR-2463

Es wurde nun gefunden, dass die Behandlung von mittels Radikalbildnern in Gegenwart von Sauerstoff vernetzbaren Polymeren und/oder Copolymeren, vor oder nach der Verformung, aber vor dem Vernetzungsvorgang, mit metallorganischen Verbindungen oder anorganischen Salzen von Übergangselementen, ausgenommen Vanadium, Verbindungen von Lanthaniden oder Gemischen davon zu gehärteten Produkten führt, die klebfreie Oberflächen aufweisen.

Die Erfindung betrifft daher ein Verfahren zur Vernetzung von Polymeren und/oder Copolymeren, die übliche Zusatz- und Füllstoffe enthalten können, mittels Radikalbildnern in Gegenwart von Sauerstoff, das dadurch gekennzeichnet ist, dass man die Polymeren und/oder Copolymeren, vor oder nach dem Verformen, aber vor dem Vernetzen, zur Verhinderung der Oberflächenklebrigkeit mit

a) metallorganischen Verbindungen von übergangselementen, ausgenommen Vanadium,

b) anorganischen Salzen der Übergangselemente von a),

c) Verbindungen von Lanthaniden oder

d) Gemischen davon,

behandelt.

Als Radikalbildner kommen beispielsweise organische Peroxide in Frage. Die Vernetzung kann unter Erwärmen, unter Ultrahochfrequenzbestrahlung (UHF) und/oder mit Heissluft-Heizsystemen erfolgen.

Als metallorganische Verbindungen sind Verbindungen aus aliphatischen und aromatischen Säuren und Übergangselementen (oder Übergangsmetallen, d. h. Elementen mit den Ordnungszahlen 21-30, 39-48, 57-80 und 89-92) geeignet. Verbindungen von Lanthaniden sind beispielsweise metallorganische Verbindungen, wie sie z. B. durch Reaktion mit einer aliphatischen oder aromatischen Säure erhalten werden und/oder anorganische Salze von Lanthaniden.

Als Beispiele für die vorstehenden, verwendbaren Metalle seien genannt: Kobalt, Mangan, Eisen, Nickel, Zirkonium, Chrom und/oder Cer.

Besonders geeignete Übergangsmetalle sind: Kobalt, Mangan, Eisen, Nickel und Cer.

Die erfindungsgemäss brauchbaren Metalle können beispielsweise als Acetate, Adipate, Sebazate, Palmitate, Stearate, als Salze von stark verzweigten gesättigten Monocarbonsäuren mit 9 bis 11 Kohlenstoffatomen, z. B. Versatate, Oktoate, Oleate, Linolate, Ricinoleate, Linoleate (= Linolenate), Triricinoleate, Naphthenate und Benzoate, Dialkylphosphate und Phosphite eingesetzt werden. Bevorzugt sind Oktoate und Naphthenate.

Als anorganische Anionen sind beispielsweise Chlorid, Sulfat, Nitrat, Carbonat und/oder Phosphat geeignet. Beispiele für anorganische Salze sind Eisen(III)-chlorid, Chrom(III)-chlorid, Kobalt(II)-chlorid, Kobalt(III)-chlorid, Kobalt(II)-bromid, Kobalt(III)-bromid.

Nachstehend sind Beispiele für die brauchbarsten metallorganischen Verbindungen aufgeführt:

1) Kobalt-stearat, -palmitat, -versatat, -neodecanoat, -oktoat, -oleat, -linolat, -ricinoleat, -linoleat, -triricinoleat, -naphthenat, -benzoat;
2) Mangan-stearat, -palmitat, -versatat, -neodecanoat, -oktoat, -oleat, -linoleat, -naphthenat;
3) Eisenstearat, -palmitat, -oktoat, -oleat, -adipat, -sebazat;

4) Nickel-stearat, -oktoat, -naphthenat, -versatat, -neodecanoat, -oleat, -linoleat, -ricinoleat; 5) Cer-stearat, -oktoat, -naphthenat, -versatat, -neodecanoat, -oleat, -linoleat, -ricinoleat.

Die metallorganischen Verbindungen werden rein im geschmolzenen Zustand oder in Lösung mit einem Metallgehalt von 1 - 25 Gew.-% Metall in der Lösung verwendet. Als Lösungsmittel kommen sämtliche organischen Flüssigkeiten, wie Kohlenwasserstoffe, Aromaten, chlorierte Kohlenwasserstoffe, Ketone, Alkohole und/oder Öle in Frage. Beispiele hierfür sind: Aceton, Xylol, Toluol, Cyclohexan, Hexan, Trichloräthan, Propanol, Hexylenglykol, Äthylacetat usw.). Es können auch Emulsionen und Suspensionen in Wasser und Öl oder organische Flüssigkeiten verwendet werden.

Weiterhin können auch hochprozentige, z.B. 1-50%ige, vorzugsweise 5-25%ige Lösungen, Emulsionen oder Suspensionen der anorganischen Salze aus Übergangselementen und/oder Lanthaniden, z.B. in wässriger Form, verwendet werden. Da bei der Benetzung der Oberfläche von Formkörpern unter Verwendung wässriger Lösungen oder Suspensionen Schwierigkeiten auftreten können, kann die Benetzung der Oberflächen verbessert werden unter Verwendung von Detergentien, wie Alkylphenolpolyäthylenglykoläthern, Na- und K-Laurinaten, oder Benzolsulfonaten, oder anderen Hilfs-mitteln, wie Gelatine, $\alpha$-Methylcellulose, Polyvinylalkohol und/oder anderen oberflächenaktiven Mitteln, die dazu geeignet sind, die Oberflächenbenetzungseigenschaften der anorganischen Salze zu verbessern.

Sämtliche mit geeigneten Quellen für freie Radikale vernetzbaren, gefüllten und ungefüllten, Polymere und Copolymere können erfindungsgemäss mit den oben genannten Metallverbindungen behandelt werden, um klebfreie Oberflächen zu erhalten. Besonders geeignet für diese Behandlung zur Vermeidung klebriger Oberflächen nach dem Härten sind Polymere und Copolymere auf der Basis von α-Olefinen. Beispiele für gegebenenfalls hochgefüllte und ölverstreckte Copolymere sind:

| | |
|---|---|
| EPM | Äthylen-Propylen-Copolymere |
| EPDM | Äthylen-Propylen-Dienmonomer-Copolymere (als Dienmonomere geeignet sind z.B. Äthylennorbornen, Cyclopentadien, Butadien u. andere) |
| SBR | Styrol-Butadien-Kautschuk |
| NBR | (Acryl)-Nitril-Butadien-Kautschuk |
| NR | Naturkautschuk (Cis-1,4-Polyisopren) |
| IR | Isoprenkautschuk, z.B. synth. Polyisoprenkautschuk |
| EVA | Äthylen-Vinylacetat-Copolymere |
| ABS | Acrylnitril-Butadien-Styrol-Copolymere |
| SBS | Styrol-Butadien-Styrol-Kautschuk |
| SIS | Styrol-Isopren-Styrol-Copolymere |
| CR | Chloroprenkautschuk, nach ASTM-Nomenklatur D-1418-72a |
| CM-Homopolymeres | chloriertes Polyäthylen |

sowie AU-Polyurethankautschuk (Polyurethankautschuk vom Polyestertyp), HDPE (Polyäthylen mit hoher Dichte), NDPE (Polyäthylen mit niedriger Dichte), chloriertes Polyäthylen und Polymethankautschuk. Die Salze oder metallorganischen Verbindungen werden durch Tauchen, Sprühen oder Streichen auf die Polymeren oder Copolymeren, die gegebenenfalls bereits als Formteile vorliegen, aufgebracht. Hierzu werden die metallorganischen Verbindungen als solche, als geschmolzene Flüssigkeiten, Lösungen, Emulsionen oder Suspensionen, wie vorstehend erwähnt, verwendet. Bevorzugt werden die Verbindungen in einer Menge von 0,1 g bis 25 g Metall pro $m^2$, üblicherweise von 0,5 bis 5 g Metall pro $m^2$, auf die Oberfläche aufgebracht. Dies ergibt z.B. bei einer Lösung von metallorganischer Verbindung, z.B. von Metalloktoat, in Xylol mit 6 Gew.-% Metallgehalt einen Verbrauch von 8 bis 80 $g/m^2$.

Die Metallsalze und metallorganischen Verbindungen können
aber auch in Mengen von 0,1 bis 10 Gew.-%, bezogen auf die
reinen Metallseifen oder anorganischen Salze, vorzugsweise
von 2 bis 5 Gew.-%, zu den (Co)-Polymerisat-Verbindungen bzw.
Mischungen gegeben werden.

Die Mischungen setzen sich im allgemeinen zusammen aus Polymer
und/oder Copolymer mit verschiedenen üblichen Zusätzen, wie
Verstärkungsmittel und Füllstoffe, wie Russ, Metalloxide, Tone,
Pigmente, Silicate, weiterhin Radikalbildner, Aktivatoren,
Coagentien, Antioxidantien, Weichmacher, Hilfsöle bzw. Öle
und/oder Streck-Öle.

Die Radikalbildner, wie übliche organische Peroxide, Azo-
Verbindungen und übliche C-C-Initiatoren, werden in der Grössenordnung von 0,5 bis 15 Gew.-%, bezogen auf die fertige
Mischung, üblicherweise von 1 bis 10 Gew.-%, zugesetzt. Coagentien, wie Triallylcyanurat, Triallylphosphat, Äthylenglykoldimethacrylat, Trimethylolpropantrimethacrylat, Divinylbenzol und/oder Diallylmaleinat, können in Mengen von
0 bis 5 Gew.-%, bezogen auf die fertige Mischung, üblicherweise von 0,5 - 3 Gew.-%, anwesend sein. Die Natur des Radikalbildners ist nicht kritisch, die Reaktion an der Oberfläche ist bei Radikalen aller Typen gleich.

Durch das erfindungsgemässe Verfahren wird es möglich, die
Bildung klebriger Oberflächen bei der üblichen Vernetzung
von Polymeren und/oder Copolymeren an der Luft zu vermeiden. Dies wird durch die folgenden Beispiele veranschaulicht.

B e i s p i e l e

Um die durch die Erfindung erzielte Verbesserung zu veranschaulichen, wurden Mischungen gemäss einer bekannt stark oberflächenklebrigen Standardrezeptur, bestehend aus 100 Teilen EPDM (enthaltend ein Dienmonomeres vom
          Äthylidennorbornentyp) mit einer
          Mooney-Plastizität NL 1+4 (100 °C) = 65 90 Teile   eines HAF Russes 60 Teile   eines hochsiedenden Kohlenwasserstofföls und 4 Teile   Dicumylperoxid 98%ig verwendet.

Diese Mischung wurde auf einem Walzenstuhl hergestellt und
zu einem 4 mm starken Fell ausgewalzt. Daraus wurden Probekörper von 20 x 30 mm ausgestanzt. Diese Probekörper wurden
teils unbehandelt und teils mit den hier beschriebenen metallorganischen Verbindungen oder anorganischen Salzen behandelt und in einem mit Gebläse versehenen Wärmeschrank bei
230 °C während 5 Minuten in Anwesenheit von Luftsauerstoff
vernetzt (5 Minuten sind bei dieser Temperatur ausreichend,
um eine 99%ige Umsetzung des Peroxids oder Vernetzung zu
erzielen).

Die vernetzten Probekörper wurden anschliessend heiss unter
konstanten Druck- und Zeitbedingungen auf ein Papier gepresst. Nach Entfernung der Probekörper vom Papier blieb
ein mehr oder weniger starker, schwarzer, klebriger Abdruck zurück.

Die mit den erfindungsgemässen Verbindungen behandelten Probekörper liessen keinen oder einen weniger intensiven Abdruck als die unbehandelten zurück.

Die folgende Tabelle zeigt die Wirkungsweise der einzelnen
Verbindungen im Vergleich zur unbehandelten Probe.

0025591

## T a b e l l e

| Bei-spiel Nr. | Verwendete Verbindung | Behand-lungs-methode | Abdruck-intensi-tät |
|---|---|---|---|
| 1 | unbehandelte Probe | – | +++ |
| 2 | Kobaltoktoat-Lsg. 6 % Me-tallgehalt in Xylol | besprüht | --- |
| 3 | Manganoktoat-Lsg. 6 % Me-tallgehalt in Xylol | besprüht | --- |
| 4 | Zirkonoktoat-Lsg. 6 % Me-tallgehalt in Xylol | besprüht | -++ |
| 5 | Eisenoktoat-Lsg. 6 % Me-tallgehalt in Xylol | aufgestrichen | --- |
| 6 | $FeCl_3$ (22%ige Lsg. in Ace-ton und $H_2O$ (1:1) | aufgestrichen | --+ |
| 7 | Zirkon-Eisenoktoat-Lsg. 5,4 % Zr, 0,6 % Fe-Gehalt in Xylol | besprüht | --- |
| 8 | Co III-acetat 20%ige Lsg. in $H_2O$ | aufgestrichen | -++ |
| 9 | $CrCl_3$ 20%ige Lsg. in $H_2O$-Aceton 1:1 | aufgestrichen | -++ |
| 10 | $FeCl_3$ 20%ige Lsg. in Aceton | aufgestrichen | --+ |
| 11 | Zr-Fe-oktoat-Lsg. 5,8 % Zr, 0,2 % Fe-Gehalt in Xylol | besprüht | --+ |
| 12 | Ni-oktoat-Lsg. 7,5 % Me-tallgehalt in Xylol | besprüht | --- |
| 13 | Cer-oktoat-Lsg. 6 % Metall-gehalt in Xylol | aufgestrichen | --- |
| 14 | Cer-oktoat-Lsg. 6 % Metall-gehalt in Xylol | 2 % der Lsg. eingemischt auf der Walze | --+ |
| 15 | Ni-oktoat, techn. rein, 15 % Metall | 2 % Ni-oktoat eingemischt auf der Walze | --+ |

Erläuterung: --- = keine
--+ = schwache
-++ = stärkere
+++ = sehr starke

<u>Patentansprüche</u>

1. Verfahren zur Vernetzung von Polymeren und/oder Copolymeren, die übliche Zusatz- und Füllstoffe enthalten können, mittels Radikalbildnern in Gegenwart von Sauerstoff, dadurch gekennzeichnet, dass man die Polymeren und/oder Copolymeren, vor oder nach dem Verformen, aber vor dem Vernetzen, zur Verhinderung der Oberflächenklebrigkeit mit

   a) metallorganischen Verbindungen von Übergangselementen, ausgenommen Vanadium,
   b) anorganischen Salzen der Übergangselemente von a),
   c) Verbindungen von Lanthaniden oder
   d) Gemischen davon,
   behandelt.

2. Verfahren nach Anspruch 1, dadurch gekennzeichnet, dass man als Verbindungen von Lanthaniden metallorganische Verbindungen von Lanthaniden und/oder anorganische Salze von Lanthaniden einsetzt.

3. Verfahren nach Anspruch 1 oder 2, dadurch gekennzeichnet, dass man metallorganische Verbindungen einsetzt, die durch Reaktion einer aliphatischen oder aromatischen Säure mit einem Übergangselement hergestellt wurden.

4. Verfahren nach Anspruch 1 oder 2, dadurch gekennzeichnet, dass man als metallorganische Verbindungen die Salze gesättigter oder ungesättigter aliphatischer und/oder aromatischer Mono- und Dicarbonsäuren einsetzt.

5. Verfahren nach Anspruch 3 oder 4, dadurch gekennzeichnet, dass man die Palmitate, Stearate, Versatate, Neodecanoate, Oktoate, Oleate, Linolate, Ricinoleate, Linoleate, Triricinoleate, Naphthenate, Benzoate, Acetate, Adipate oder Sebazate einsetzt.

6. Verfahren nach einem oder mehreren der Ansprüche 1 bis 5, dadurch gekennzeichnet, dass man als Übergangselemente Metalle mit den Ordnungszahlen 21, 22, 24 bis 30, 39 bis 48, 57 bis 80 und 89 bis 92 wählt.

7. Verfahren nach einem oder mehreren der Ansprüche 1 bis 5, dadurch gekennzeichnet, dass man als Übergangselemente und/oder Lanthaniden Kobalt, Mangan, Eisen, Nickel, Zirkonium, Chrom und/oder Cer wählt.

8. Verfahren nach einem oder mehreren der vorhergehenden Ansprüche, dadurch gekennzeichnet, dass man die gegebenenfalls übliche Zusatz- und Füllstoffe enthaltenden Polymeren und/oder Copolymeren zu Formkörpern formt und diese durch Tauchbehandlung, Sprühauftrag oder Streichen mit den metallorganischen Verbindungen oder Metallsalzen behandelt.

9. Verfahren nach einem oder mehreren der Ansprüche 1 bis 7, dadurch gekennzeichnet, dass man die metallorganischen Verbindungen oder Metallsalze in die gegebenenfalls übliche Zusatz- und Füllstoffe enthaltenden Polymeren und/oder Copolymeren einmischt.

--------

| Kategorie | Kennzeichnung des Dokuments mit Angabe, soweit erforderlich, der maßgeblichen Teile | betrifft Anspruch |
|---|---|---|
| | DE - B2 - 2 164 560 (MITSUBISHI) | 1-7 |
| | + Patentanspruch 1; Zeilen 43, 44, 52; Spalte 7, Zeilen 60-68 + | |
| | -- | |
| | DE - B2 - 2 031 845 (E.I. DU PONT) | 1-7 |
| | + Patentanspruch; Spalte 2, Zeilen 23-26 + | |
| | -- | |
| X | DE - A1 - 2 424 680 (GENERAL ELECTRIC) | 1,3,6,9 |
| | + Gesamt + | |
| | ---- | |

**EINSCHLÄGIGE DOKUMENTE**

KLASSIFIKATION DER ANMELDUNG (Int. Cl.)

C 08 J 3/24
C 08 J 7/04 //
(C 08 J 3/24
C 08 K 3/24
C 08 K 5/09)

RECHERCHIERTE SACHGEBIETE (Int. Cl.3)

C 08 J
C 08 K
C 08 L
C 08 F

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort WIEN | Abschlußdatum der Recherche 10-12-1980 | Prüfer DICHER |
|---|---|---|

EPA form 1503.1 06.78